# EUROPEAN PATENT APPLICATION

(11) **EP 2 728 856 A1**
(43) Date of publication of application: **07.05.2014**
(21) Application number: 13178081.9
(22) Date of filing: 25.07.2013
(51) Int. Cl.: H04N 5/445, H04N 21/462, H04N 21/472, H04N 21/482

(54) **Apparatus and method for television**

(30) Priority: 02.11.2012 GB 201219789
(71) Applicant: Sony Corporation, Tokyo 108-0075 (JP); Sony Europe Limited, Brooklands Weybridge Surrey KT13 0XW (GB)
(72) Inventor: Londero, Mark, Alton, Hampshire GU34 5BP (GB)
(74) Representative: DeVile, Jonathan Mark

(57) **Abstract**

An apparatus for selecting television programmes for display on a television, includes a receiver for receiving audio/video data representing the television programmes and for receiving data indicating a schedule for the television programmes. The schedule of television programmes includes television programmes which have been transmitted by the one or more broadcast transmission systems and for one or more of the television programmes in the television schedule, which have been transmitted, an indication that the television programme can be received by selectively streaming audio/video data representing the television programme from one or more servers. A control processor receives the data indicating the schedule of television programmes and generates signals representing the schedule of television programmes for display on the television, so that a user may select the television programs for display on the television or for recording. Thus, the generated signals can form an Electronic Programme Guide (EPG) when displayed to the user on a television thereby forming an interface through which the user can select appropriate television programmes. The control process is configured to determine that one of the television programmes which has been broadcast is not available to be selectively streamed and for the identified programme to identify one or more alternative sources of the audio/video data relating to the television programme and to arrange for the generated signals representing the schedule of television programmes to include an indication of the alternatives for selection by a user. The user is therefore provided with a convenient way of retrieving television programmes from alternatives sources including pay per view in a convenient and efficient way.

## Description

### Field of Invention

The present disclosure relates to apparatus and methods for use with a television for selecting programmes for display on the television. Accordingly, embodiments can provide apparatus and methods for generating and displaying an electronic programme guide (EPG) on a display device such as a television.

### Background of the Invention

A continuing development in television systems and technologies and a cross over with other forms of delivering television programmes has meant an increasing level of complexity and development of television receivers and apparatus for receiving and displaying audio/video data representing television programmes. Modem televisions are typically provided with an interface for displaying television programmes which are available for a user to select from various television channels which the television can receive with respect to time. Such an interface is typically referred to as an Electronic Programme Guide (EPG). Accordingly a user can browse through an EPG to view available programmes and using for example a remote control can select a desired programme for display on the television. An apparatus for receiving data representing a schedule of television programmes for generating the EPG may therefore exist within the television itself, or may exist within a set top box. The television or the set top box may be connected to a source for receiving the television signals such as a television antenna for detecting terrestrial signals carrying the television programmes, for example with DVB-T or DVB-T2 or a cable connection for receiving television programmes from DVB-C or DVB-C2 or a satellite dish for DVB-S or DVB-S2. Alternatively, television programmes can be delivered by mobile network broadcasts or via an internet such as for example internet protocol (IP) television.

In European Patent Application EP2252051A1 there is disclosed a method of content retrieval using an electronic programme guide (EPG) by selecting a content item out of a set of contents items and using the item as a seed to execute a recursive or iterative process until one of the content items of the set is determined by the user as a content item for consuming. The content item is displayed with respect to a sub set of the seed items at a display in connection with a television apparatus and each of the content items of the respective sub set is represented by a respective image so that a user may select a content item from the sub set for display.

US Patent Application US2010/0260475 discloses a television recording apparatus which includes a recording unit for recording television signals and stores meta data representing information in respect of the recording including a channel and the recording time. The graphical display of the recordings is displayed in accordance with a schedule of recordings in which graphical objects representing the respective recordings are arranged in two dimensions. An EPG is therefore produced with a format corresponding to the recorded items and programs can be filtered to display programmes at certain times in the EPG.

The development of the internet for accessing television content has meant that in recent years even if a television programme has already been transmitted on a broadcast channel, a user can select the television programme for display by accessing a server which can stream the television programme in the form of audio/video data transported in data packets using an internet protocol from the server. A receiver of the data packets can recover the audio/video data and regenerate the television programmes for display on a television. Thus, as well as conventional broadcast channels which broadcast television programmes at particular times, a user can have the option of selecting a television programme which has been broadcast by accessing a server via the internet to receive that television programme. Accordingly there have been developed EPGs which include an indication that a television programme which has already been broadcast may still be accessed by streaming the television programme via the internet. Such an EPG may be referred to as a "reverse" EPG because the user can scroll backwards in time to review times or days which are backwards in time which display a schedule of television programmes which have been broadcast but include an indication that these can be accessed by streaming over the internet. By displaying such an indication the user can select a television programme from a set top box which may include an arrangement for automatically accessing the television programme from a server so as to stream the audio/video data to the television or set top box for display.

Providing a more convenient way of delivering television content to a user which utilises an EPG and which improves a user experience continues to be desirable.

### Summary of Invention

According to one aspect of the present invention there is provided an apparatus for selecting television programmes for display on a television, the apparatus comprising a receiver for receiving audio/video data representing the television programmes and for receiving data indicating a schedule for the television programmes, the schedule of television programmes including television programmes which are to be broadcast by one or more broadcast transmission systems for each of the plurality of television channels with the respect to a transmission time. Furthermore the television schedule also includes television programmes which have been transmitted by the one or more broadcast transmission systems and for one or more of the television programmes in the television schedule, which have been transmitted, an indication that the television programme can be received by selectively streaming audio/video data representing the television programme from one or more servers. For example, the one or more broadcast transmission systems may comprise a terrestrial or satellite broadcast service or indeed a cable service transmitting television programmes in accordance with a DVB standard such as DVB-T, T2, C, C2 or S2, or delivered by mobile cellular networks using broadcast channels of internet protocol television. A control processor is configured to receive the data indicating the schedule of television programmes and to generate signals representing the schedule of television programmes for display on the television, so that a user may select the television programs for display on the television or for recording. Thus, the generated signals can form an Electronic Programme Guide (EPG) when displayed to the user on a television thereby forming an interface through which the user can select appropriate television programmes. The control process is configured to determine that one of the television programmes which has been broadcast is not available to be selectively streamed and for the identified programme which is no longer available to be selectively streamed to identify one or more alternative sources of the audio/video data relating to the television programme and to arrange for the generated signals representing the schedule of television programmes to include an indication of the alternatives for selection by a user.

Embodiments of the present invention can provide an arrangement for an enhanced EPG which displays television programmes which have been broadcast, that is to say looking backwards in time in the past, for which one or more of those television programmes can be received by streaming audio/video data representing the television programme from a server. For example, where the television programme can be streamed from a source then an icon can be applied to an element of a display within the EPG indicating to the user that the television programme is available for streaming. However, embodiments of the present invention provide a further enhancement for a situation in which a television programme which has been broadcast is no longer available or were never available to be streamed from a server.

According to some embodiments an apparatus which may form part of a television or the set top box is arranged to determine that a television programme is not available to be streamed from a source and to provide alternative sources relating to the television programme, for example alternative sources for the same television programme, alternative television programmes in the same series or alternative television programmes within the same genre. In one example, one of the alternatives may provide an indication of a location of the television programme from a commercially available source such as a DVD library, an on-line pay per view source or other fee charging service.

In one example an alternative source may include a user's subscription service like Lovefilm or Netflix, in which the television is "linked" to a user subscription account. For this example for the alternative sources for content may be identified to be preferably from sources for which a user already has a subscription, and for such examples these additional sources may be displayed in the EPG, and may include (financial) incentives to display certain alternative options for selection.

Accordingly, the user is provided with an improved experience and greater access to television programmes which may otherwise have been missed. This is because although it is conventional for television programmes to be made available for streaming from a server in a service provided by the original broadcaster, the availability of the television programmes may only last for a predetermined number of days before it is discontinued. Accordingly, by providing alternative sources for the same television programme or related content, then the user can access the television programme even though it is no longer available for streaming after it has been broadcast.

Various aspects and features of the present invention are defined in the appended claims which include a graphic user interface, a set top box and a television.

### Brief Description of Drawings

Embodiments of the present invention will now be described by way of example only with reference to the accompanying drawings, wherein like parts are provided with corresponding reference numerals, and in which:
Figure 1 is a pictorial representation of a television connected to a set top box in domestic environment;
Figure 2 is schematic block diagram of a set top box and a television connected to a terrestrial television receiver and to an internet;
Figure 3 is a schematic block diagram of one example of a set-top box shown in Figure 2 according to one example embodiment;
Figure 4a is a graphical representation of an example of an EPG showing programmes which are to be broadcast; Figure 4b is an EPG representing programmes which have been broadcast and so represents a reverse time EPG looking at a day which has passed; and Figure 4c is an EPG showing programmes which have passed but are further back in the past by a number of days with respect to the present day;
Figure 5 is a graphical representation of an EPG illustrating an example looking backwards in time at a programme schedule including one or more television programmes which are not available for streaming but showing alternative sources for the television programme in accordance with an example of embodiment;
Figure 6 is a graphical representation of the EPG shown in Figure 5 in which another of the alternatives has been activated for selection by a user;
Figure 7 is a graphical representation of the EPG shown in Figure 5 in which another of the alternatives has been activated for selection by a user;
Figure 8 is a graphical representation of the EPG shown in Figure 5 in which another of the alternatives has been activated for selection by a user;
Figure 9 is a further example of an EPG for the example shown in Figure 5 showing example buttons of a remote control which can be used to select the alternatives for a television programme which is not available for streaming;
Figure 10 is a further example of an EPG according to the present technique in which a banner is generated and presented to the user with colours corresponding to buttons of a remote control which can be used to select the alternatives for a television programme which is not available for streaming;
Figure 11a is an example of a enhanced EPG before a user has selected a cell of the EPG corresponding to a television programme which is not available for streaming; and Figure 11b is a further example of an EPG according to the present technique in which a selected cell is provided with options through which the user can scroll to select alternatives for the television programme which is not available for streaming; and
Figure 12 is a flow diagram illustrating an operation of an apparatus for presenting alternative sources for a television programme in an EPG in accordance with an embodiment of the present invention.

### Description of Preferred Embodiments

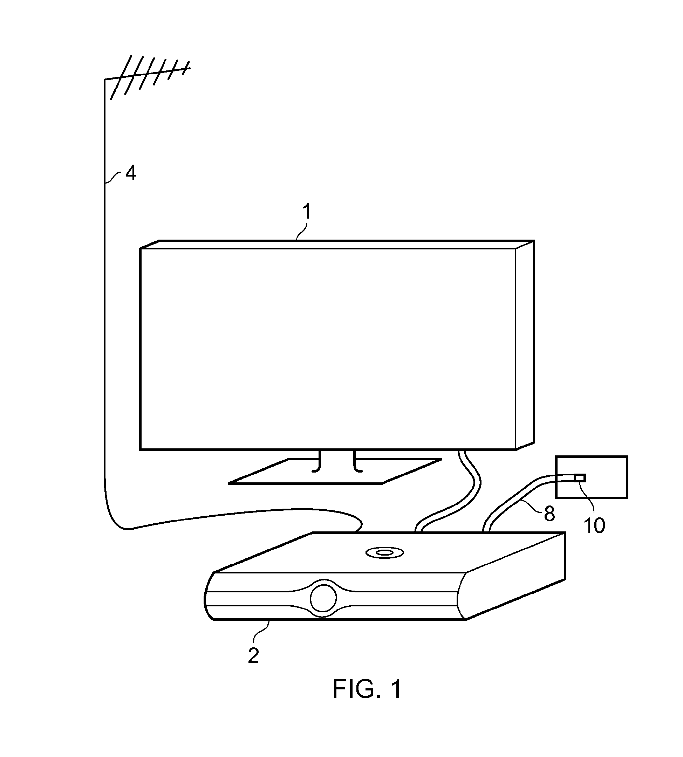

Embodiments of the present invention may find application in various forms in which an electronic programme guide (EPG) is presented on a television for a user to select television programmes for display. An example arrangement is shown in Figure 1. In Figure 1 a television apparatus 1 is shown in association with a set top box 2. As shown in Figure 1 the set top box 2 receives signals from a television antenna 4. The set top box is connected to the television 1 by a connection cable 6. The set top box 2 is also connected via cable 8 to a wired internet connection 10.

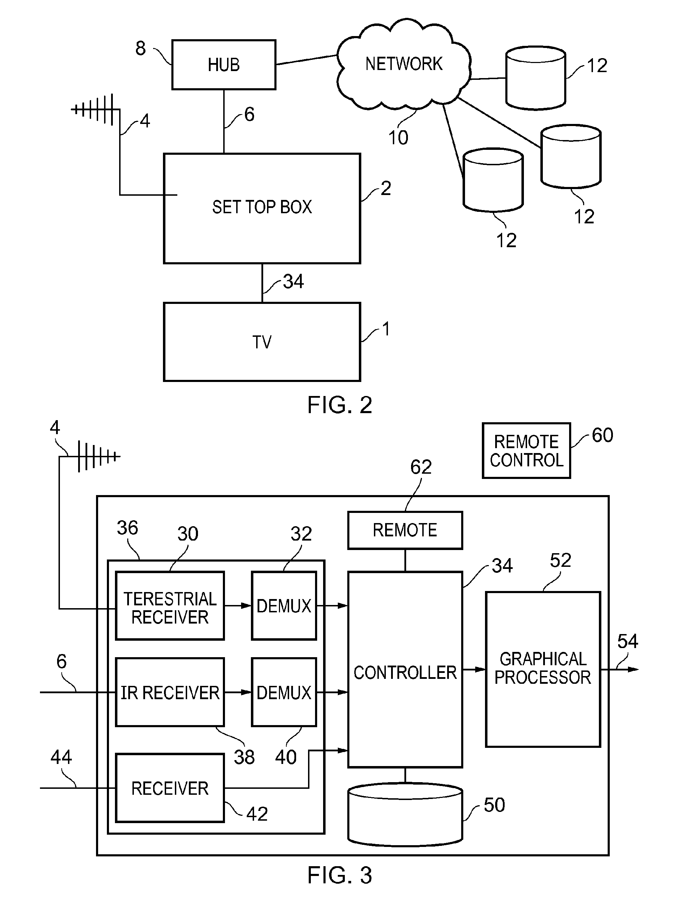

A schematic block diagram illustrating the arrangement shown in Figure 1 in functional form is shown in Figure 2. In Figure 2 the television 1 is connected to the set top box 2 and the set top box 2 is connected to the internet via cable 6 which connects the set top box to a home hub or gateway 8 which is connected to an internet represented as a cloud 10 which is provided by an internet service provider. The television antenna 4 is also connected to the set top box 2.

As shown in Figure 2 the set top box 2 has access via the home gateway hub 8 and internet 10 to servers 12. The servers 12 can form a source of data from which a television programme schedule can be created. Furthermore one or more of the servers 12 can provide a source for audio/video data representing the television programme for streaming the television programme over the internet through the network 10 the home gateway 8 into the set top box 2. Therefore, the servers 12 can form both a source of the television programme schedule for generating an EPG as well as a source of the television programmes themselves particularly for example where the television programmes are to be streamed after the television programmes has been broadcast from a broadcasting system. In an alternative arrangement the antenna and hub may be connected directly to the TV without the need for a set top box.

An example embodiment of the present invention is shown in Figure 3 which is a schematic block diagram of the set top box 3. However, as will be appreciated in other examples the arrangement shown in Figure 2 could form part of the television 1 or indeed could form part of any other apparatus which is arranged to generate an EPG for selecting television programmes such as a computing device, a tablet computer or a mobile phone. In Figure 3 the television antenna 4 feeds radio frequency signals to a terrestrial receiver 30 which demodulates and decodes television programmes from television channels which are multiplexed onto a transport stream provided by a radio frequency signal detected by the antenna 4. The television channels are broadcast from a transmitter of the radio frequency signals by a television broadcast service provider using a terrestrial broadcast transmission system.

In one example the television programmes carried by the radio signal are modulated and encoded in accordance with a DVB standard such as DVB-T or DVB-T2. According to the DVB standard, the broadcast television signal comprises a stream of packets of data multiplexed together and modulated onto the radio frequency signal detected by the antenna 4. The stream is sometimes referred to as a channel because it corresponds to a transmissions channel. The stream contains packets of video and audio data and packets of signalling data. Each packet of signalling data is associated with a particular table. The arrangement and contents of the table is in accordance with the DVB standards such as EN300468 and EN302755 (DVB-T2 standard). For the example of DVB-T2, signalling packets communicated as part of the transport of services, providing the television programmes, includes a service description table (SDT) and an event information table (EIT) which provides information relating to a schedule of programmes for transmission on each of a plurality of channels which are conveyed by the DVB-T2 signal. Accordingly, at the output of the terrestrial receiver 30 there is provided a de-multiplexer 32 which de-multiplexes the services from the transport stream which are then fed to a controller 34 which can be used to select one of the television channels and therefore the television programme carried by the transport stream.

Also shown in Figure 3 forming part of what is generally referred to as a receiver 36 is an IP receiver 38 which receives internet protocol data from the connecting cable 6. The IP receiver generally provides a protocol stack for receiving audio/video data or signalling data from the servers 12 shown in Figure 2 via the internet and the local area network cable 6. Correspondingly to the example above for the terrestrial receiver, a de-multiplexer 40 is arranged to recover audio/video data representing a television programme which maybe streamed from one of the servers 12 over the internet and fed to the controller 34 for selection and display by the user. However, again the servers 12 can also provide the IP receiver with data representing a schedule of programmes from which an EPG can be generated by the control of 34. Similarly the receiver 36 may also provide further receiver unit 42 which may receive a stream of audio/video data or signalling from a connecting channel 44 from an alternative source such as a cable which then recovers the audio/video data representing a television programme and/or signalling data representing a schedule of television programmes which are fed to the controller 34. In one example the television programmes may be conveyed using a DVB standard such as DVB-C2.

In operation the controller 34 is arranged to select one or more television programmes from one or more of the sources from the receiver 36 for either display on the television 1 or recording in a data store such as a hard disk 50. The controller 34 therefore feds a programme for display to a graphics processor 52 and generates television signals fed on an output signal 54 to the television 1 for display on the television.

A user may control the apparatus shown in Figure 3 either using a control panel on the apparatus itself or using controls on a remote control 160 which generates signals which are received by a receiver unit 62 which therefore receives user commands which are passed to the controller 34.

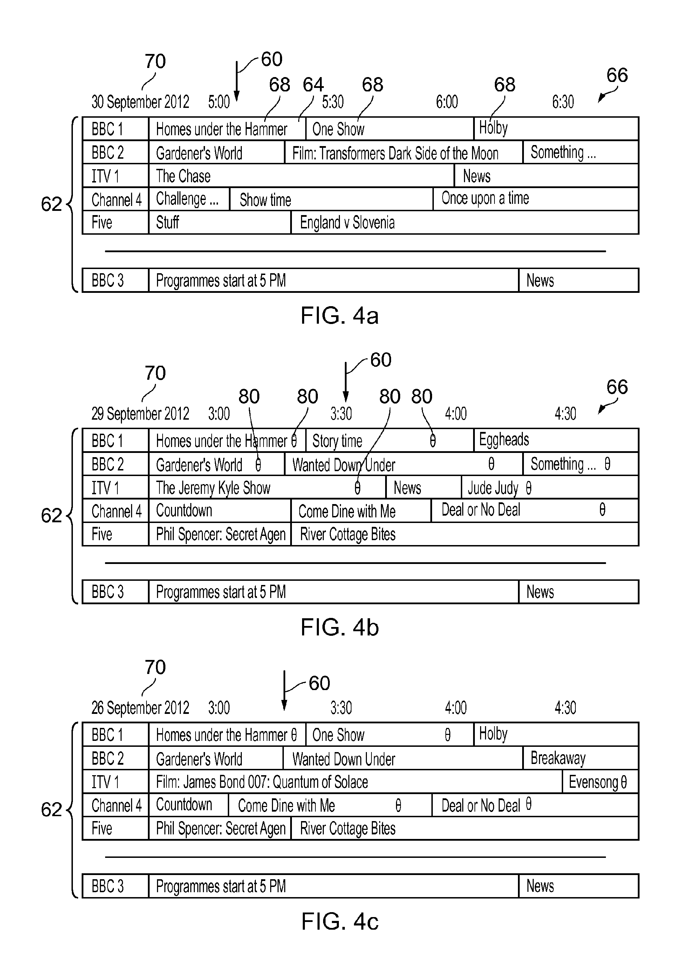

Embodiments of the present invention provide an arrangement for generating an enhanced EPG using the controller 34 from data representing a schedule of television programmes received from one or more sources such as illustrated by the receiver 36 receiving signalling data and/or the servers 12 via the internet to generate the EPG. An example of an EPG is shown in Figure 4a.

In Figure 4a it is assumed that the current date is 30 September 2012. Thus the current time may be approximately 5:10PM so that the electronic programme guide illustrates programmes which are to be broadcast after a time of 5:10PM. Thus an arrow 60 represents a current time. For the example shown in Figure 4a for each of a plurality of segments of time, which in the example shown is in segments of 30 minutes, elements of the EPG represent television programmes which are to be transmitted for each of the half hour slots from 5:00PM, 5:30PM, 6:00PM, 6:30PM for each of a plurality of channels 62. Thus as shown in Figure 4a, which corresponds to a conventional arrangement, each of the elements 64 represents a duration of a television programme shown with respect to time 66 with an identifier 68 providing an identification of the particular television programme to be broadcast.

Figure 4b represents a corresponding example to that shown in Figure 4a except that the television programmes shown in the EPG of Figure 4b are for the previous day, which is as indicated by a date indicator 70 to be 29 September 2012 and so the programmes represented in the EPG have already been broadcast. However, as shown in Figure 4b because the programmes have already been broadcast they can no longer be received from a conventional broadcast transmission system such as the transport stream provided by a DVB-T2 transmission. However, as shown some of the programme elements displayed in the EPG with an indicator "θ" 80 which indicates that the particular television programme is available from one or more of the servers shown in Figure 3 for streaming to the set top box 2 via the internet. Accordingly, by selecting one of the programmes concerned the controller within the set top box 2 is arranged to access a particular URL providing a source for the audio/video data representing the television programme from which the television programme can be streamed and displayed to the user on the television.

Television programmes, which have been broadcast, can be accessed after the time of broadcast using a streaming service from a server 12 provided by the original broadcaster such as the BBC iPlayer or the Channel 4, 40D. One aspect of providing a "catch up" service in this way is that the television programmes are only available for streaming from a server 12 provided by the broadcaster for a predetermined time after the original time and date of broadcast. As such although a television programme may initially be available for streaming from a server 12 over the internet, after a predetermined number of days the television programme may no longer be available for streaming over the internet. Such an example is shown in Figure 4c in which the EPG is shown for a date of 26 September 2012 which is 4 days before the current day of 30 September 2012. Therefore, for some of the examples shown in Figure 4c such as those on BBC2 for example "Gardeners World" and "Wanted Down Under" are no longer available for streaming and so the identifier 80 is not shown. In other examples the television programme may never have been made available for streaming by the broadcaster for example because of a lack of resources or copyright management issues. For example, in some instances Sports content and Movie content can often have limited broadcast rights, so it may not be available for streaming by the original broadcaster or may only be available from different sources, or not available at all.

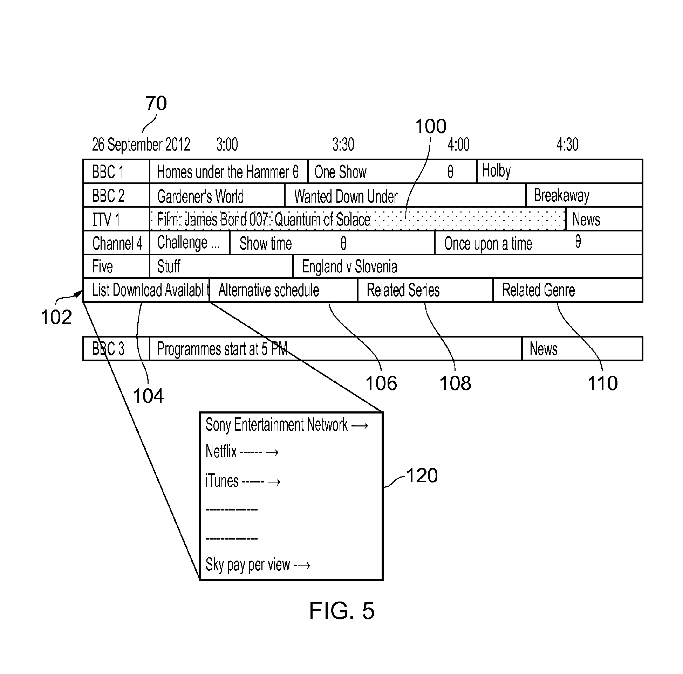

Embodiments of the present invention can provide an arrangement in which a user can access a television programme, which is no longer available for streaming from an internet service provider provided by the original broadcaster from alternative sources. Such an example is shown in Figure 5.

In Figure 5 the EPG shown in Figure 4c is represented and for the example shown in Figure 5 a user has selected for highlight one of the television programmes in an element 100 which is a film "James Bond 007 Quantum of Solace". In response to a user selecting the "Quantum of Solace" film on the EPG, the controller generates signals representing alternative sources for retrieving the television programme corresponding to the selected programme 100 for which a download service is no longer available. As shown in Figure 5 on a task bar 102 which is also known as a "barker" channel, four alternatives are presented to the user following a selection of programme element 100 for the film "Quantum of Solace" providing television programmes which are related to the selected item 100. Alternatively or additionally the four selection options update as the user navigates the EPG. The selected alternatives are presented in a menu box 120 after the user selects a first alternative 104. From the menu box 120, the user is offered an alternative of download sources for retrieving the film "Quantum of Solace".

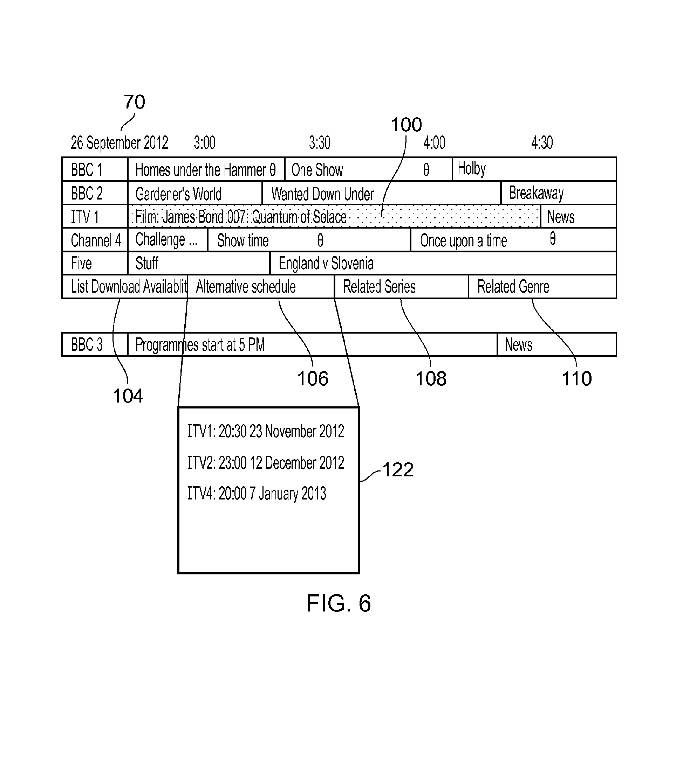

As shown in Figure 6, by selecting the first alternative 104, related television programmes are presented in the menu box 120 indicating URLs of websites from which the user may receive the same film. For example the option for the "Sony Entertainment Network" is provided, "Netflix" and "iTunes" so that the user may pay to stream the audio/video data representing the film "Quantum of Solace". Thus the example the list of download availability may provide options for purchasing the television programme 100 from online sources and provide links to various websites where the television programmes is available for purchase. In another example, all of the available alternatives may be presented contemporaneously to the user, for example, in an alternative EPG.

In one example the selection of the film "Quantum of Solace" may prompt an advertisement to be generated indicating the release of a new related television programme, such as for example the release of a new James Bond 007 movie "Skyfall" on 26 October.

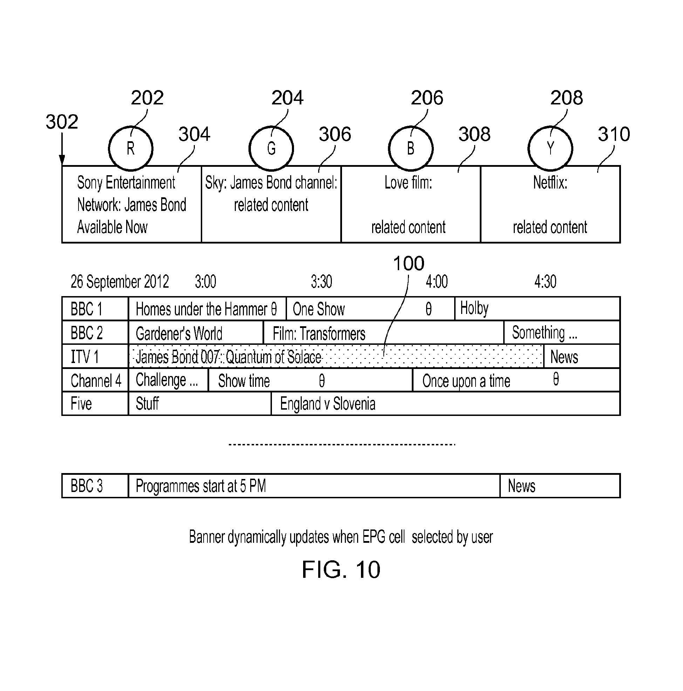

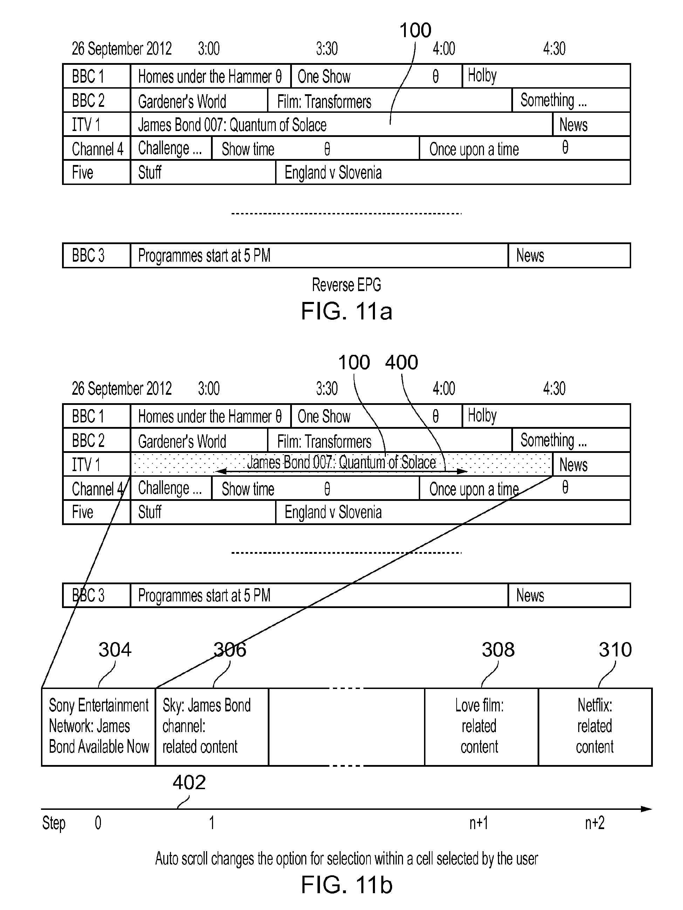

Alternative embodiment could be that when Quantum of Solace cell is highlighted that the recommended content replaces the EPG cell, or if there are many options that the cell can scroll to reveal multiple selection options as explained below with reference to Figures 10 and 11.

In a second option 106 the user is presented with an alternative schedule for example for some point in the future when the television programme 100 may be available for receipt as a broadcast channel. This example is illustrated in Figure 6, in which a menu box 122 is generated by the EPG showing alternative times and channels on which the film "Quantum of Solace" will be transmitted. Add something about hyperlinking to a different part of the EPG or being able to select recordings.

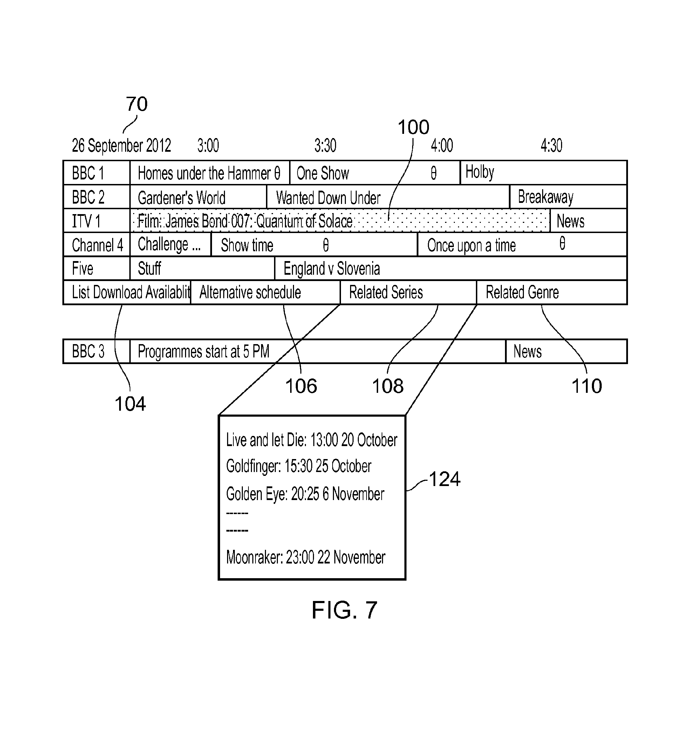

A further alternative the user is provided with an option 108, which is shown in Figure 7 to generate a third menu box 124 providing options for selecting related series content. For example where there are several other movies of James Bond 007 which may be either available online or maybe broadcast as a scheduled television programmes at some later date, these may be presented. As shown from the example menu box 124, these include "Live and Let Die", "Goldfinger", "Golden Eye" and "Moonraker".

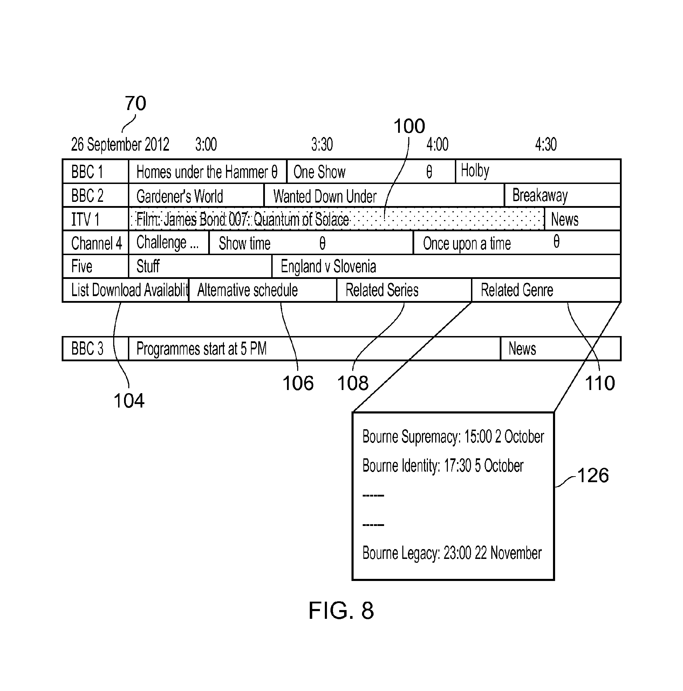

In a further option 110 a user is provided with alternative television programmes of the same genre, for example spy films such as Bourne Supremacy or Bourne Identity. Thus by selecting the fourth alternative, the user is presented within a menu box 126 shown in Figure 8 the availability either from the television broadcast schedule or a screaming service, the alternatives within the same genre, which include "Bourne Supremacy", "Bourne Identity" and "Bourne Legacy".

As will be appreciated from the example embodiments, a set-top box or apparatus connected to or forming part of a remote viewing device such as a television is provided with an interface for selecting media items such as television programs by presenting alternatives for receiving media items which are related to a media item which is no longer available for streaming after the media item has been broadcast. The related media items could be the same media item from one or more different sources or different media items which have one or more common characteristics with the selected media item. For example the different media items could be media items in the same series of items or having the same actor or characters as the selected media item.

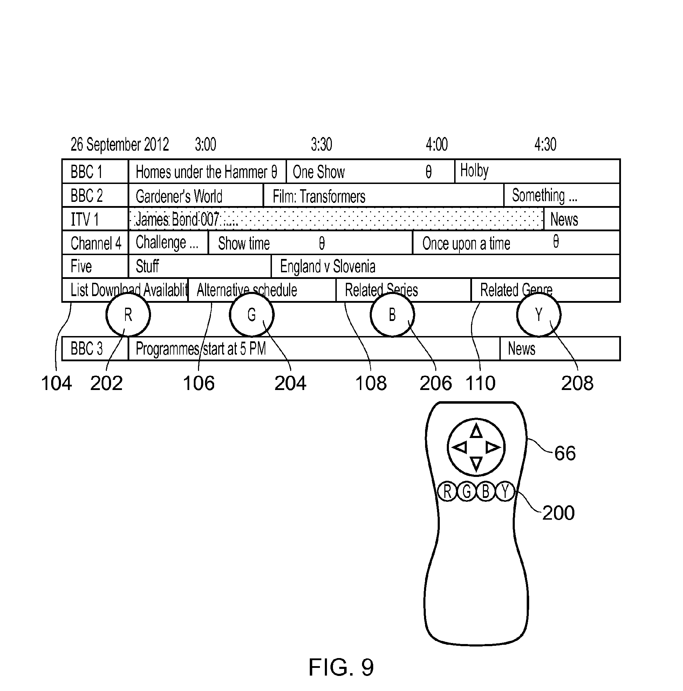

In one example, shown in Figure 9, the four options shown on the barker channel 102 maybe coloured with respect to colour selection buttons presented on a remote control 60 and labelled red R, Green G, Blue B and Yellow Y on buttons 200 to correspond to the four options 202, 204, 206, 208 for the respective old alternatives 104, 106, 108, 110. Accordingly the user is provided with an ease of selecting an alternative through the television programme 100 which is not available for streaming.

In another example which is shown in Figure 10, after a user has selected a cell of the EPG corresponding to a television programme of interest, which is not available for streaming, the controller generates automatically a banner 302 which is presented at an appropriate location on the EPG. The banner may be displayed permanently with the EPG, or whenever there is one or more television programmes which are not available for streaming, or when a user selects a cell of a television programme which is not available for streaming. In one example, the banner may be automatically updated with alternative options for selection by a user. For the example shown in Figure 10, upon selection of the cell of the EPG for the James Bond film Quantum of Solace, the banner 302 is generated with four options 304, 306, 308, 310, which are dynamically updated with alternative options for the film. In a first option, the Sony Entertainment Network provides in a cell 304 an alternative source for the film on pay per view, whereas in a second cell 306 the user is presented with alternative but related content for example a Sky James bond channel. Similarly other options may be provided in further cells 308, 310, such as providing an option for selecting related content from Love film or the Netflix web-site. In one example, the alternative options 304, 306, 308, 310 may be coloured in correspondence with colour buttons 202, 204, 206, 208 red, green, blue and yellow of the remote control 60 allowing a user to easily select one of the options from the banner 302.

Figures 11a and 11b illustrate a further example embodiment in which the controller 34 generates signals for display to represent an EPG and in response to a user selecting an EPG cell for which a television programme is not available for streaming, the cell is replaced with scrolling options. As shown in Figure 11a, an example EPG is shown in which the user has not selected a cell, for example the cell for the James Bond film Quantum of Solace has not yet been selected. However as shown in Figure 11b, after selecting the cell of the EPG 100, corresponding to the film James Bond Quantum of Solace, a double headed arrow 400 appears indicating that the user may scroll backward or forward to select different alternative options for the film which is not available for streaming. In one example the cell 100 is replaced by the option currently identified by scrolling. In another example the alternative option may be presented in a separate window. As shown in Figure 11b, the four alternative options 304, 306, 308, 310 from Figure 10 are shown with respect to a horizontal axis 402 with a step number which indicates a number of scrolling clicks the user may have made using the remote control 60. Thus a scrolling click to the right is +1 and a click to the left is -1, so that the scrolling number is accumulated from left and right clicks and the corresponding display option presented. The alternative option 304, 306, 308, 310 may then be displayed in the cell 100 of the EPG in correspondence with a scrolling operation (number of left or right control button pushes) of the remote control 60.

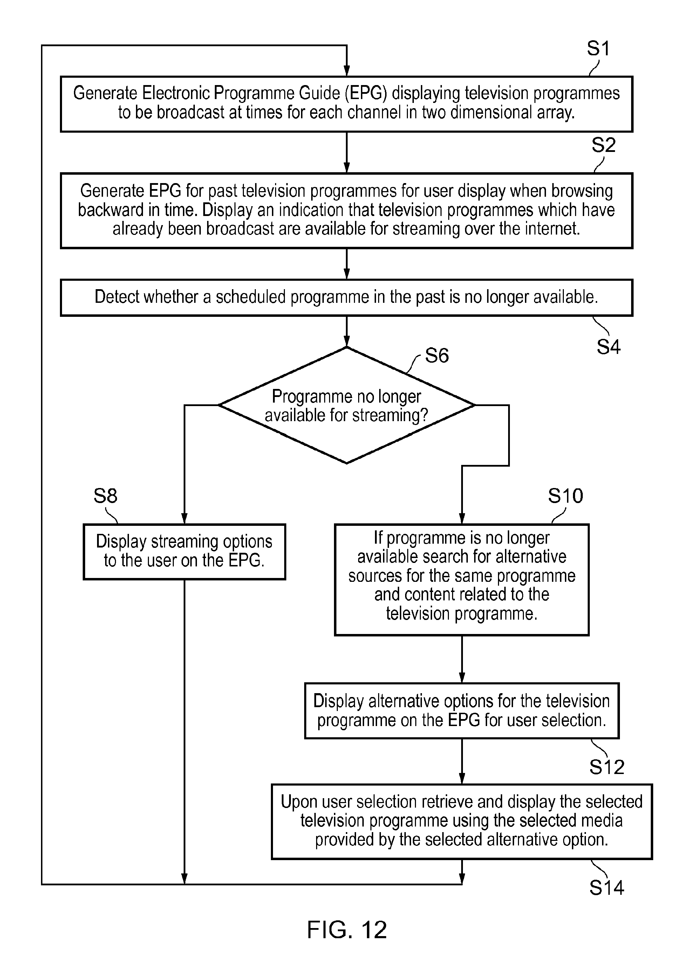

Figure 12 provides a flow diagram representing the operation of the controller 34 to generate an EPG in accordance with the present technique. As shown in Figure 10 in step S1, the controller 34 first receives data representing a schedule of transmission of television programmes from a broadcast service providing a time of transmission of various television programmes on each of the plurality of channels and generates an EPG representing the television programme schedule for display on the television. The EPG may provide in each element a representation of the television programme so as to display in a two dimensional grid of time with respect to channel, channels on which the television programmes are broadcast with respect with time at which they are to be broadcast.

S2: In step S2 the controller 34 generates the EPG not only for television programmes which are to be broadcast but television programmes which have been broadcast so that the EPG represents the examples shown in Figures 4b, 4c and 5 for programmes which have been broadcast and therefore the EPG is looking backwards in time to provide a so called enhanced EPG. For each of the television programmes which is available for streaming from a server as a download service an indication "θ" 80 is displayed with respect to each of the elements of the EPG corresponding to the television programmes which are available for streaming over the internet.

S4: The controller according to an example embodiment is then arranged to detect that a television programme within the EPG is not available for streaming over the internet and therefore cannot be downloaded or streamed by a user.

S6: A decision point S6, the controller 34 determines whether the programme is no longer available or was not available for streaming. If the programme is available for streaming then the streaming option is presented to the user on the EPG at step S8.

S10: If the programme is no longer available or was not available for streaming then the controller 34 transmits data to and receives data from the one or more servers or accesses other sources to determine one or more alternatives for retrieving the television programme. As indicated above, the alternatives may include alternative sources for the same television programme such as an online film library such as the Sony Entertainment Network, iTunes or Netflix for example or may provide alternative films within the same series or alternative genres of film. The controller 34 then generates the alternatives for a selected or highlighted television programme and presents these alternatives to the user in the EPG in some form. In one example one of the television programmes is replaced with the options which can be selected by the user or a barker channel is presented displaying the options. These options are generated and displayed in step S12. In one example, having selected one of the alternatives, further options may be presented to the user such as the source of the television programme or whether a pay per view option is available.

S14: Having selected to retrieve the television programme from an alternative source the controller in response to a user command retrieves the audio/video data representing the television programme and presents this on the television 1 for enjoyment of the user.

Various further aspects and features of the present invention are defined in the appended claims.

Various modifications may be made to the embodiments described above without departing from the scope of the present invention. For example although the term television has been used, it should not be interpreted as a only encompassing a conventional fixed receiving apparatus, but could be a mobile device, such as a mobile telephone, tablet computer or other video display receiver. As such although examples of broadcasting audio/video data have included for example DVB, other broadcasting techniques could be used such as ATSC 2.0 or 3.0 or MBMS in which data is broadcast via a cellular communications network or WiFi network. As will be appreciated, although the embodiments have been described with respect to an EPG for past television programmes which have been broadcast, the abovementioned aspects and features could also be applied to television programmes which have not yet been broadcast, so looking to future EPG presentations. Hence embodiments of the present invention relate to an enhanced EPG in which alternative options are available for television programmes which have not yet been broadcast.

It will be appreciated that the above description for clarity has described embodiments with reference to different functional units and/or processors. However, it will be apparent that any suitable distribution of functionality between different functional units or processors may be used without detracting from the embodiments. Example embodiments described above may be implemented in any suitable form including hardware, software, firmware or any combination of these. Described embodiments may optionally be implemented at least partly as computer software running on one or more data processors and/or digital signal processors. The elements and components of any embodiment may be physically, functionally and logically implemented in any suitable way. Indeed the functionality may be implemented in a single unit, in a plurality of units or as part of other functional units. As such, the invention may be implemented in a single unit or may be physically and functionally distributed between different units and processors. Although the present disclosure has been described in connection with some embodiments, it is not intended to be limited to the specific form set forth herein. Additionally, although a feature may appear to be described in connection with particular embodiments, one skilled in the art would recognize that various features of the described embodiments may be combined in any manner suitable to implement an example embodiment.

## Claims

1. An apparatus for selecting television programmes for display on the television, the apparatus comprising
a receiver for receiving audio/video data representing the television programs and for receiving data indicating a schedule for transmission of the television programmes, the schedule of television programmes including television programmes which are to be broadcast by one or more broadcast transmission systems for each of a plurality of television channels with respect to a transmission time, and television programmes which have been transmitted by the one or more broadcast transmission systems, and for one or more of the television programmes which have been transmitted an indication that the television programme can be received by selectively streaming audio/video data representing the television programme from one or more servers,
a control processor configured to receive the data indicating the schedule of television programmes and to generate signals representing the schedule of television programmes for display on the television and selectable by a user for display on the television or recording, wherein the control processor is configured
to determine that one of the television programmes which has been broadcast is not available to be selectively streamed,
to identify one or more alternatives sources of audio/video data relating to the television programme, and
to arrange for the generated signals representing the alternatives to be displayable for selection.

2. An apparatus as claimed in Claim 1, wherein the one or more alternative sources of audio/video data provide one or more alternative sources for receiving the same television programme which is not available to be selectively streamed by the one or more servers.

3. An apparatus as claimed in Claim 1 or 2, wherein the one or more alternative sources of audio/video data provide one or more sources for receiving audio/video data of a television programme which is related to the content of the television programme which is not available from the streaming source.

4. An apparatus as claimed in any preceding Claim, wherein the one or more alternative sources of audio/video data include on line purchase of the television programme.

5. An apparatus as claimed in any preceding Claim, wherein the apparatus is arranged to operate in combination with a remote control and one or more alternatives can be selected using the remote control.

6. An apparatus as claimed in Claim 5, wherein the signals represent the one or more alternative sources with respect to red green, blue and yellow buttons of the remote control.

7. An apparatus as claimed in any preceding Claim, wherein the one or more sources for streaming the television programme is a streaming service for delivering packet data representing the television programme via an internet using an internet protocol.

8. An apparatus as claimed in any preceding Claim, wherein the one or more broadcast transmission systems including terrestrial, cable or satellite digital broadcast transmission systems and an internet based transmission system.

9. A television including an apparatus for selecting television programmes for display on the television, the apparatus comprising
a receiver for receiving audio/video data representing the television programs and for receiving data indicating a schedule for transmission of the television programmes, the schedule of television programmes including television programmes which are to be broadcast by one or more broadcast transmission systems for each of a plurality of television channels with respect to a transmission time, and television programmes which have been transmitted by the one or more broadcast transmission systems, and for one or more of the television programmes which have been transmitted an indication that the television programme can be received by selectively streaming audio/video data representing the television programme from one or more servers,
a control processor configured to receive the data indicating the schedule of television programmes and to generate signals representing the schedule of television programmes for display on the television and selectable by a user for display on the television or recording, wherein the control processor is configured
to determine that one of the television programmes which has been broadcast is not available to be selectively streamed,
to identify one or more alternatives sources of audio/video data relating to the television programme, and
to arrange for the generated signals representing the alternatives to be displayable for selection.

10. A graphical user interface for use with a television for selecting television programmes for display on the television, the graphical user interface providing, when displayed on a television comprising
a two dimensional array of elements representing a schedule of television programmes with respect of time, the schedule for the television programmes including television programmes which are to be broadcast by one or more broadcast transmission systems for each of a plurality of television channels with respect to a transmission time, and television programmes which have been transmitted by the one or more broadcast transmission systems, and for one or more of the television programmes representing an indication that the television programme can be received by selectively streaming audio/video data representing the television programme from one or more servers, and for at least one of the television programmes which has been broadcast and is not available to be selectively streamed, displaying a representation of one or more alternatives sources of audio/video data relating to the television programme for selection.

11. A remote display device including an apparatus for generating an electronic programme guide on the remote display device, the remote display device comprising
a receiver for receiving audio/video data representing the television programs and for receiving data indicating a schedule for transmission of the media items, the schedule of media items including media items which are to be broadcast by one or more broadcast transmission systems for each of a plurality of television channels with respect to a transmission time, and media items which have been transmitted by the one or more broadcast transmission systems, and for one or more of the media items which have been transmitted an indication that the media item can be received by selectively streaming audio/video data representing the media item from one or more servers,
a control processor configured to receive the data indicating the schedule of media items and to generate signals representing the schedule of media items for display on the television and selectable by a user for display on the television or recording, wherein the control processor is configured
to determine that one of the media items which has been broadcast is not available to be selectively streamed,
to identify one or more alternatives sources of audio/video data relating to the media item, and
to arrange for the generated signals representing the alternatives to be displayable for selection.

12. A method of selecting television programmes for display on the television, the method comprising
receiving audio/video data representing the television programs,
receiving data indicating a schedule for transmission of the television programmes, the schedule of television programmes including television programmes which are to be broadcast by one or more broadcast transmission systems for each of a plurality of television channels with respect to a transmission time, and television programmes which have been transmitted by the one or more broadcast transmission systems, and for one or more of the television programmes which have been transmitted an indication that the television programme can be received by selectively streaming audio/video data representing the television programme from one or more servers,
generating signals representing the schedule of television programmes for display on the television and selectable by a user for display on the television or recording, wherein the generating the signals includes
determining that one of the television programmes which has been broadcast is not available to be selectively streamed,
identifying one or more alternatives sources of audio/video data relating to the television programme, and
arranging for the generated signals representing the alternatives to be displayable for selection.

13. A method of vending media items using a television, the method comprising receiving audio/video data representing media items,
receiving data indicating a schedule for transmission of the media items, the schedule of media items including media items which are to be broadcast, and media items which have been transmitted, and for one or more of the media items which have been transmitted an indication that the media item can be received by selectively streaming audio/video data representing the media item from one or more servers,
generating signals representing the schedule of media items for display on the television and selectable by a user for reproduction or recording, wherein the generating the signals includes
determining that one of the media items which has been broadcast is not available to be selectively streamed,
identifying one or more alternatives sources of audio/video data relating to the media item from which the user can purchase the media item for reproduction,
arranging for the generated signals representing the alternatives sources of the media item to be displayable to a user for selection, and
upon concluding a transaction confirming agreement to purchase a related media item for reproduction.

14. A method as claimed in Claim 13 or 14, wherein the one or more alternative sources of audio/video data provide one or more alternative sources for receiving the same media item or television programme which is not available to be selectively streamed by the one or more servers.
